# EUROPEAN PATENT APPLICATION

(11) **EP 1 314 932 A1**
(43) Date of publication of application: **28.05.2003**
(21) Application number: 02026153.3
(22) Date of filing: 25.11.2002
(51) Int. Cl.: F23D 14/78

(54) **A heating means**

(30) Priority: 26.11.2001 IT MO20010231
(71) Applicant: WORGAS BRUCIATORI S.R.L., I-41043 Formigine, Modena (IT)
(72) Inventor: Fogliani, Guiseppe, 41043 Formigine (Modena) (IT)
(74) Representative: Crugnola, Pietro

(57) **Abstract**

A heating means that comprises a diffuser means (9) provided with openings for the outflow and subsequent combustion of a mixture of fuel and air conveyed to said heating means, and a heat-exchanger means (10) associated with said diffuser means (9).

## Description

This invention concerns a heating means, in particular a heating means that can be used in a heating appliance.

It is known that the nitrogen oxide and CO content in the combustion products of a heating appliance depends amongst other things on the temperature of the flames generated by the combustion of a mixture of air and fuel fed to a burner inserted in the heating appliance, said content increasing if the temperature of the flames increases.

In addition it is known that, in burners with bladed flames, it is problematic to modulate the thermal power of the burner during its operation because at power rates that are lower than the maximum power rate for which the burner has been designed the flame tends to flatten out on the diffuser, thereby causing said diffuser to overheat. This phenomenon is the more accentuated the further the operating level of the burner is from the maximum power rate.

Furthermore it is known that, if the flame flattens out on the burner diffuser, it tends to become unstable and to vibrate, thereby making burner operation unpleasantly noisy.

A system for decreasing the nitrogen-oxide content in combustion products limits the maximum temperature reached by the flames by absorbing part of the heat produced by combustion in the zone immediately around the flames by means of a cooling circuit, the parts of which are arranged in the immediate vicinity of the flames, above the burner diffuser.

Another system provides the burner body with a cooling system, the parts of which are in general arranged beneath the diffuser, at a certain distance from it, to keep the temperature of the body of the burner and of the diffuser relatively low.

Said systems are rather complicated and are extremely difficult to integrate into existing heating appliances.

One object of this invention is to provide a heating means that is constructionally simple and cheap, which enables the nitrogen-oxide content in combustion products to be significantly reduced, enabling the power supplied by the burner to be modulated without the risk of phenomena of overheating of the diffuser and of noisy burner operation and which can be integrated with the other parts of heating appliances, such as the heat exchanger, combustion chamber and burner body, and which can be used in different types of heating appliances.

According to this invention a heating means is supplied that comprises a diffuser means provided with openings for the outflow and subsequent combustion of a mixture of fuel and air conveyed to said heating means, characterised in that it further comprises a heat-exchanger means associated with said diffuser means.

The heating means according to the invention has a simple and compact construction, can be easily integrated with other parts of heating appliances, such as heat exchangers, combustion chambers and burner bodies, can be easily used in heating appliances of different types, enables the nitrogen-oxide content in combustion products to be significantly reduced and makes possible a wide modulation of the thermal power supplied in the heating appliance.

The invention will now be described here below, by way of examples that do not limit the scope of the invention, referring to the accompanying drawings, wherein:
Fig. 1 is a partially cross-sectioned front view of a first type of heating appliance with which the heating means according to the invention is associated;
Fig. 2 is a cross-section II-II of Fig. 1;
Fig. 3 is a view like that of Fig. 1 of a second type of heating appliance;
Fig. 4 is a cross-section IV-IV of Fig. 3;
Fig. 5 is a view like that of Fig. 1 of a third type of heating appliance;
Fig. 6 is a cross-section VI-VI of Fig. 5;
Fig. 7 is a view like that of Fig. 1 of a fourth type of heating appliance;
Fig. 8 is a cross-section VIII-VIII of Fig. 7;
Fig. 9 is a schematic cross section of a modular unit comprising a heating means according to the invention, it being possible to integrate said modular unit with other parts of a heating appliance;
Fig. 10 is the cross-section X-X of Fig. 9;
Fig. 11 is an embodiment of the heating appliance in Fig. 5;
Fig. 12 is the cross-section XII-XII of Fig. 11.

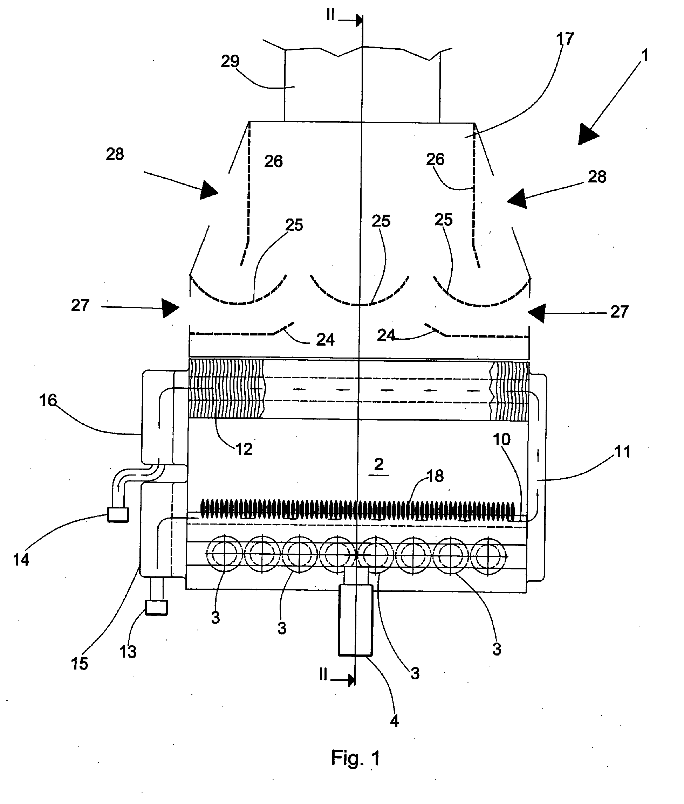

Referring to Fig. 1, 1 indicates, overall, a heating appliance comprising a combustion chamber 2, underneath which a feed chamber 7 is defined, wherein one or more Venturi tubes 3 are arranged. The Venturi tubes 3 are fed with a fuel, for example a gaseous fuel, via a feed conduit 4, that delivers the gaseous fuel to a collector 6 that feeds the Venturi tubes 3 by means of the respective nozzles 5. The flow of fuel leaving the nozzles 5 causes a vacuum in the mouth 8 of each Venturi tube 3, through which air is sucked in from the outside environment to mix with said fuel.

Above the feed chamber 7 the heating means according to the invention is arranged. Said heating means comprises a diffuser means 9, consisting, for example, of a metal sheet wherein a plurality of openings is made, for example in the form of slits or holes, with any distribution, through which the mixture of air and fuel formed in the Venturi tubes 3 and sent through said Venturi tubes 3 to the feed chamber 7 can pass.

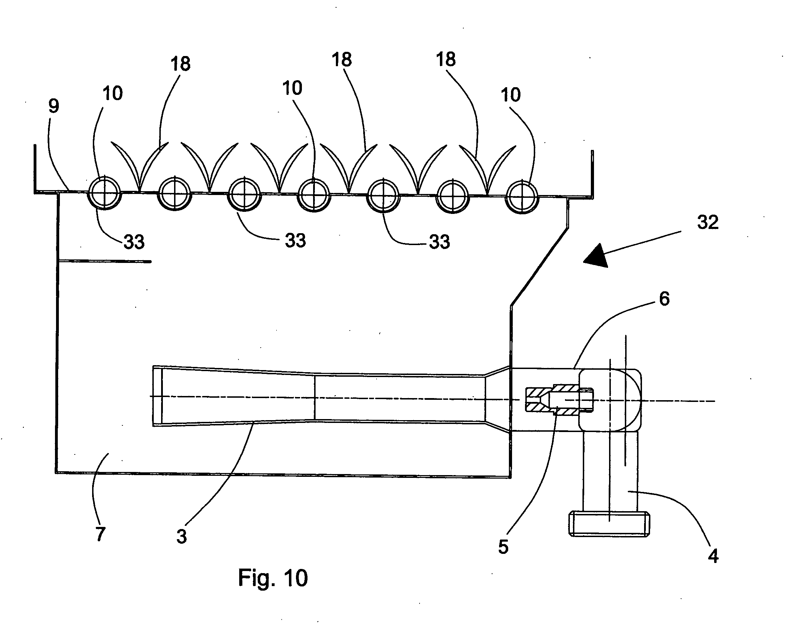

The heating means according to the invention further comprises a heat-exchanger means consisting, for example, of a plurality of conduits 10 inserted in appropriate seats 33 (Fig. 10) obtained in the face of the diffuser opposite the face near which the flames 18 form that are generated by the combustion of said mixture. Said seats are obtained between the rows of slits of the diffuser 9. Alternatively, the conduits 10 can simply be fixed, for example by means of welding, to said face of the diffuser 9 opposite the face near which the flames 18 are formed. The conduits 10 are connected at a first end with a first fitting 11, that connects the conduits 10 to a further heat-exchanger means arranged above the combustion chamber 2. Another end of the conduits 10 is connected to a second fitting means 15 that connects the conduits 10 with a delivery conduit 13 of a heat-exchanger fluid , for example water. The further heat-exchanger means 12 is connected to a third fitting means 16 that connects the further heat-exchanger means 12 to an evacuation means 14 for said heat-exchanger fluid.

Above the further heat-exchanger means 12 a fume-evacuation means 17 for the fumes produced by the combustion of said mixture is arranged, said fume-evacuation means 17 communicating with a flue means 29.

Inside said fume-evacuation means 17 first baffle elements 24 and second baffle elements 25 are arranged that are used to direct the fumes produced by combustion towards side evacuation openings 27 if the draw to the flue 29 is interrupted, for example by a blocked flue.

Inside the fume-evacuation means 17 third baffle means 26 is further provided that cooperates with the second baffle means 25 to direct towards further side openings 28 any countercurrent air flow that enters from the flue 29, for example due to wind, to ensure a draw through the further openings 28 in order to evacuate the fumes.

The delivery conduit 13 and the evacuation conduit 14 may be connected, for example, to a heating system of a dwelling, or to a system for producing hot water.

The combustion chamber 2 is laterally delimited by the first, second and third fitting means 11, 15, 16, and at the front and rear by the respective closing walls 19 and 20.

During operation of the appliance 1, the water coming from the system to which the appliance 1 is connected passes through the conduits 10, absorbing heat from the diffuser 7. In this way overheating of the diffuser is avoided, which enables the thermal power produced by the appliance 1 to be modulated without problems. Furthermore, cooling the diffuser by means of the conduits 10 also cools the mixture of fuel and air that reaches the slits of the diffuser: this leads to an increase in the mass of air present in a given volume of mixture that reaches the slits and therefore to a higher rate of primary aeration, which contributes to keeping the flames 18 detached from the surface of the diffuser, thereby eliminating or at least greatly reducing the risk of vibration of the flames 18 and the consequent development of noise.

Finally, cooling the diffuser 9 enables the maximum temperature that flames can reach to be reduced to values that enable significant reduction of the nitrogen oxides current in the fumes produced by combustion.

The first, second and third fitting means 11, 15 and 16 respectively, and the further heat-exchanger means 12 can be integrated into the heating means according to the invention to constitute a modular heating part that can be integrated in a heating unit comprising the combustion chamber 2 with the respective front 19 and rear 20 walls, the feed chamber 7, the fume-evacuation means 17 and the means feeding the fuel and air mixture.

In this way, the heating means according to the invention can be used, according to needs, in different types of heating appliance, without having to be adapted to the appliance in which it is installed or without having to adapt the appliance to the heating means according to the invention.

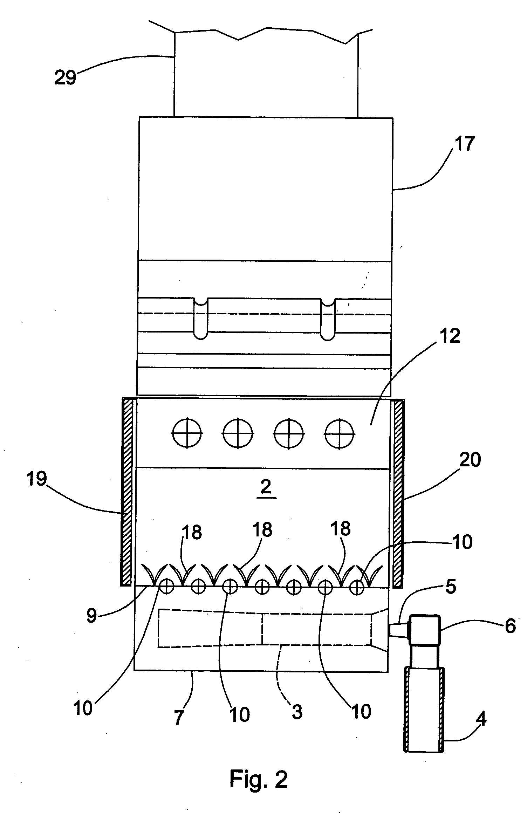

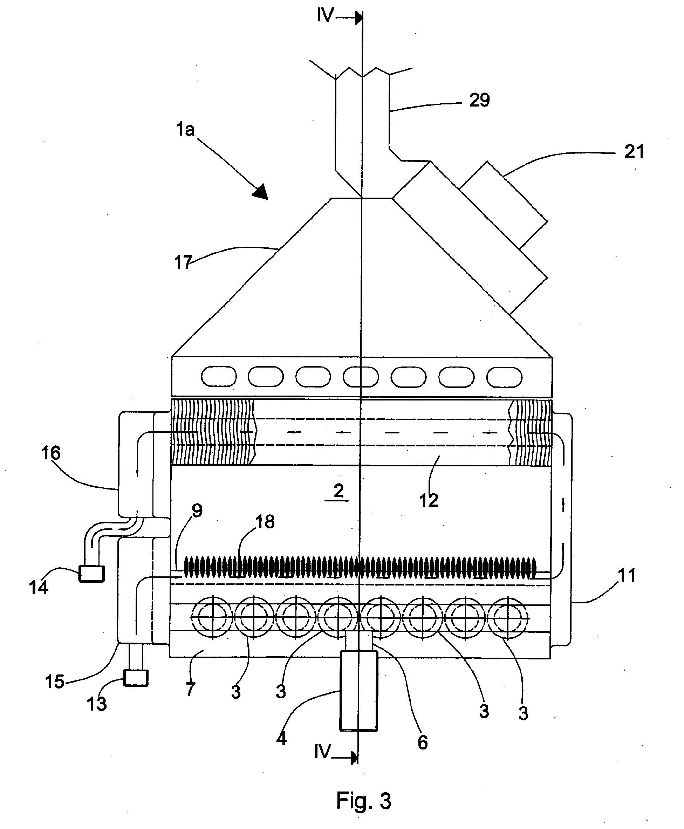

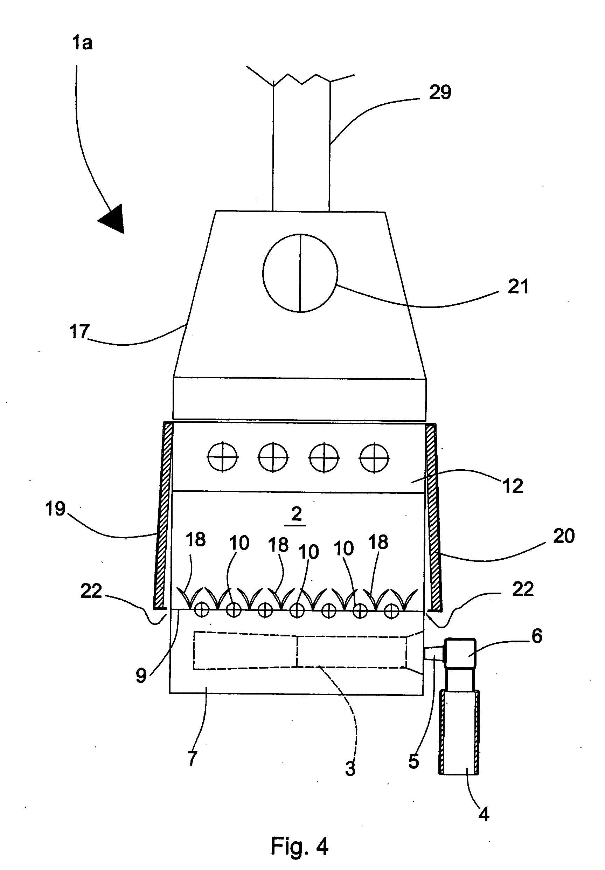

Figures 3 and 4 show the application of the heating means according to the invention in a heating appliance 1a, which differs from the appliance 1 disclosed in Figs 1 and 2 inasmuch as the fume-evacuation means 17 comprises an aspiration means 21 suitable for creating a vacuum inside the fume-evacuation means 17 and inside the combustion chamber 2 connected to it. This vacuum is used to aspirate air from the outside environment through openings 22 made in the front and rear walls 19 and 20 at the bottom zone of the combustion chamber 2, wherein the diffuser 9 is arranged. This air is the so-called secondary air used for the combustion of said mixture.

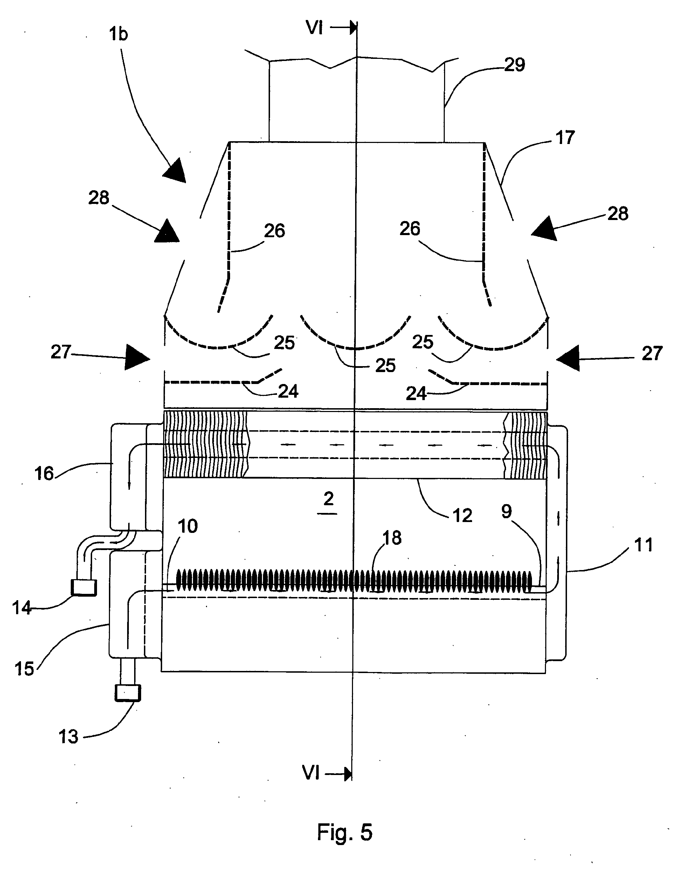

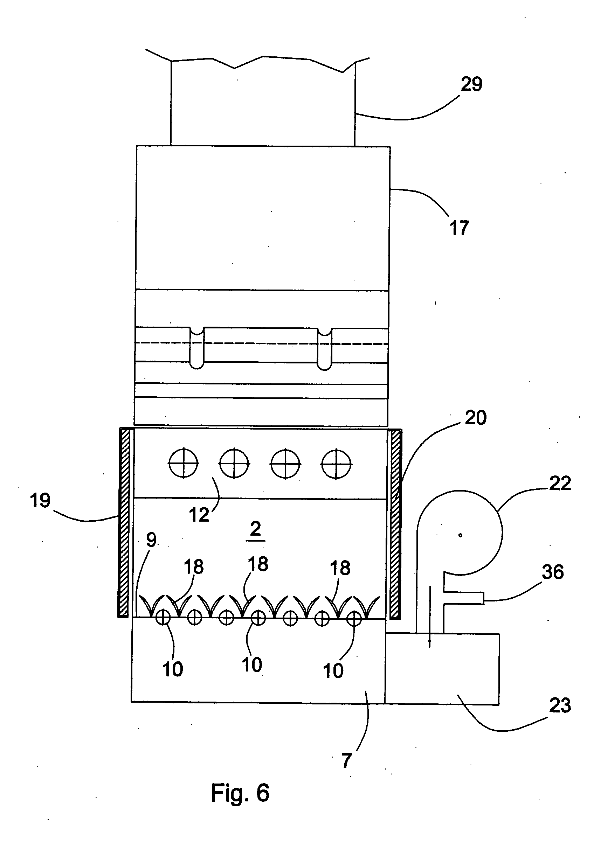

In Figs 5 and 6 the application of the heating means according to the invention is disclosed in a heating appliance 1b wherein the mixture of fuel and air that has already been formed is delivered at pressure to the feed chamber 7 by means of a fan means 22, connected to a collector means 23, communicating with said feed chamber 7, and to a feed conduit 36 through which said fuel is fed.

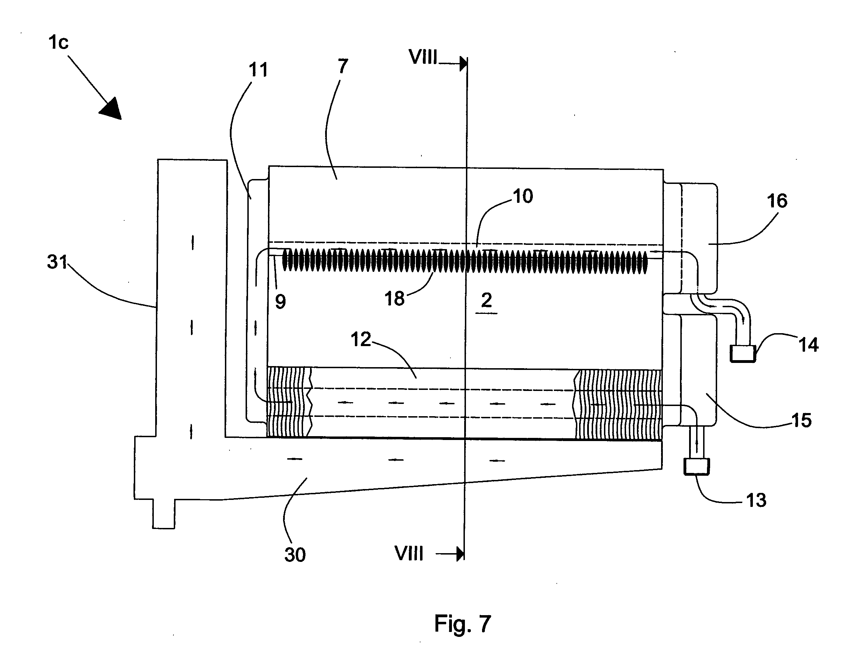

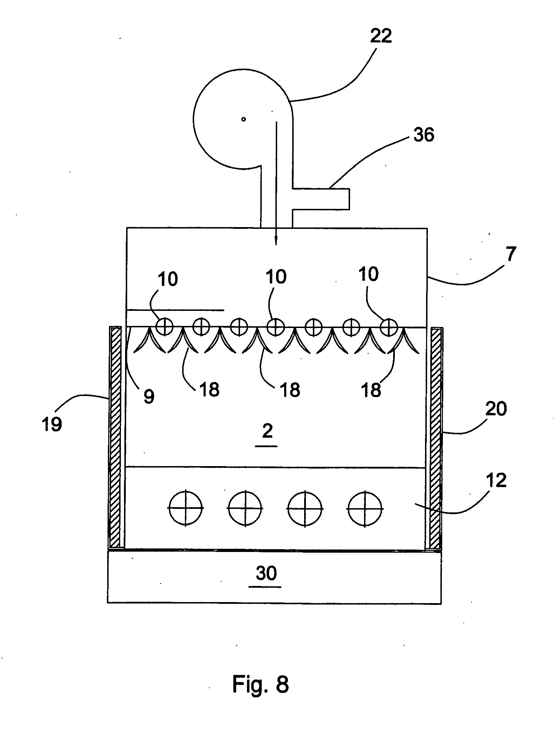

Figs 7 and 8 disclose the application of the heating-means according to the invention in a heating appliance 1c wherein the feed chamber 7 is arranged above the diffuser 9, which then closes the feed chamber 7 at the bottom. A fan means 23c delivers the mixture of air and fuel to the top of the feed chamber 7 and pushes it through the slits in the diffuser 9. In this way the flames 18 produced by combustion of the mixture are formed near the bottom face of the diffuser 9 and are directed downwards.

In this case, the conduits 10 are arranged at the top face of the diffuser 9.

The heat exchanger 12 is underneath the diffuser 9 and communicates with an evacuation conduit 30, which conveys the fumes to a flue means 31.

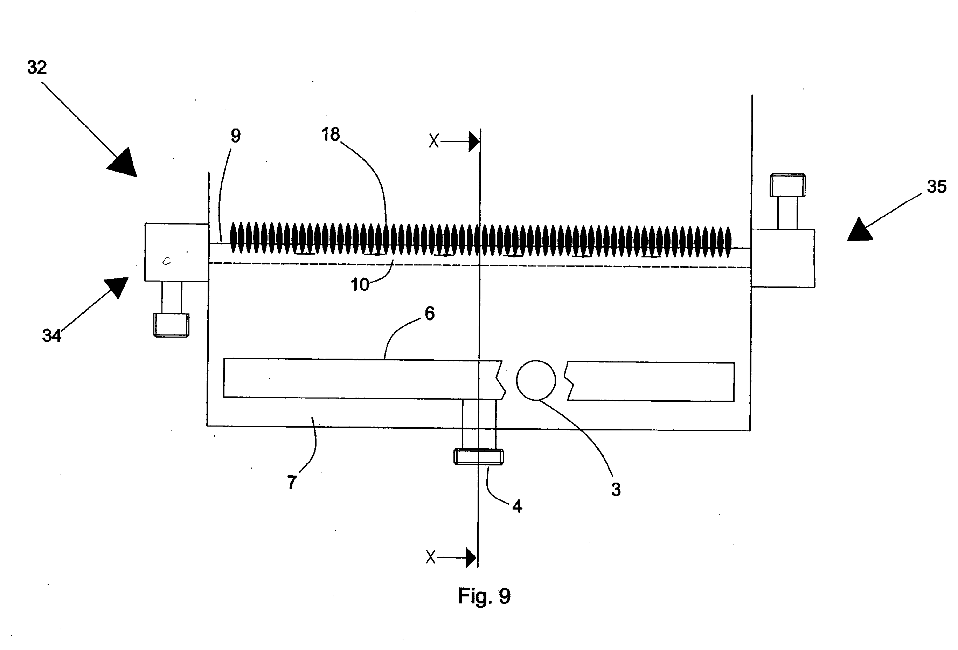

Figs 9 and 10 disclose the heating means according to the invention integrated into a modular unit 32 comprising the diffuser 9, the cooling conduits 10, the feed chamber 7 and the fitting means 34, 35 which enable the cooling conduits 10 to be connected to a source of cooling fluid and to a heat-exchanger means respectively. The modular unit may comprise, inside the feed chamber 7, one or more Venturi tubes 3, fed with a fuel, for example a gaseous fuel, via a feed conduit 4, that delivers the gaseous fuel to a collector 6, that feeds the Venturi tubes 3 by means of respective nozzles 5.

The modular unit can be easily integrated into an already existing heating appliance by connecting the fitting means 33 and 34 to the hydraulic circuit, which sends a fluid to be heated to the heating appliance, and to the heat exchanger of the heating appliance.

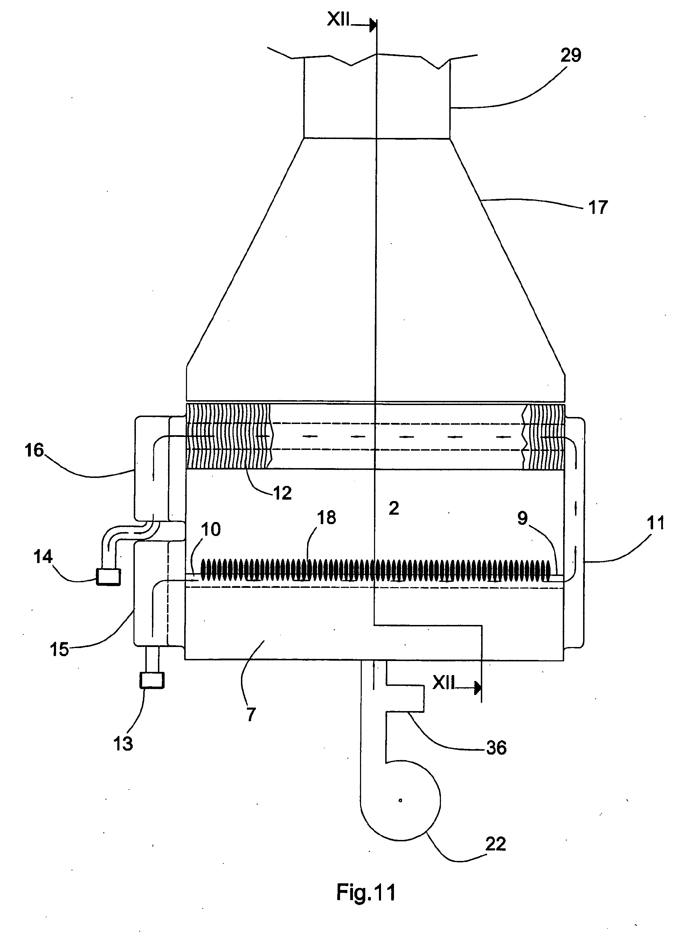

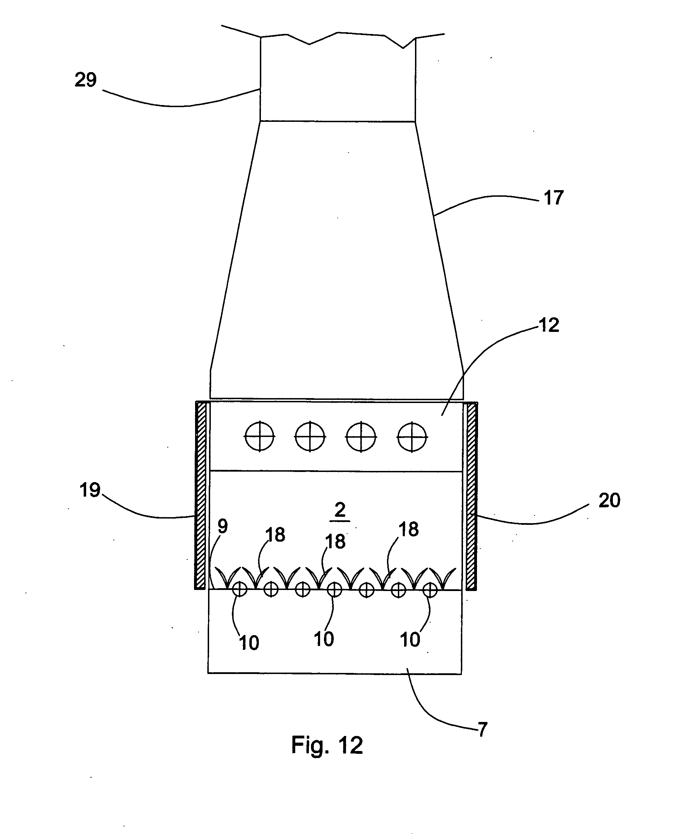

Figs 11 and 12 disclose an embodiment 1d of the heating appliance disclosed in Figs 5 and 6. In this embodiment, the fan means 22 is arranged underneath the feed chamber 3. In this embodiment the collector means 23 placed between the fan means 22 and the feed chamber 7 can be eliminated.

The diffuser means 9 may have a flat configuration, as in the disclosed examples, but may also be made with a curved configuration, for example as a sector with a cylindrical or at least curved surface, or with a tubular shape. In all cases, the conduits 10 will be arranged at the face of the diffuser opposite the face near which the flames 18 are formed.

In the practical embodiment the materials, dimensions and implementation parts may differ from those disclosed but be technically equivalent to them without falling outside the legal scope of this invention.

## Claims

1. A heating means comprising a diffuser means (9) provided with openings for the outflow and subsequent combustion of a mixture of fuel and air conveyed to said heating means, **characterised in that** it further comprises a heat-exchanger means (10) associated with said diffuser means (9).

2. A heating means according to claim 1, **characterised in that** said heat-exchanger means is arranged at a first face of said diffuser (9) opposite a second face near which flames (18) are formed that are produced by the combustion of said mixture.

3. A heating means according to claim 1 or 2, wherein said heat-exchanger means comprises a conduit means (10).

4. A heating means according to claim 3, wherein said conduit means is inserted in seats (33) made in said first face of the diffuser (9).

5. A heating means according to claim 3, wherein said conduit means is fixed to said first face of the diffuser (9).

6. A heating means according to one of the previous claims, wherein said diffuser means (9) has a flat shape.

7. A heating means according to one of the claims from 1 to 5, wherein said diffuser means (9) has a curved shape.

8. A heating means according to claim 7, wherein said diffuser means (9) has the shape of a sector with a cylindrical surface.

9. A heating means according to claim 7, wherein said diffuser means (9) has a tubular shape.

10. A heating means according to one of the previous claims, further comprising a first fitting means (13, 15; 34) through which a fluid can be delivered to said heat-exchanger means (10).

11. A heating means according to claim 10, further comprising a second fitting means (11; 35) through which said fluid can be evacuated from said heat-exchanger means.

12. A heating means according to one of the previous claims, wherein said diffuser means (9) is associated with a feed chamber means (7) into which said mixture is delivered.

13. A heating means according to claim 12, wherein a Venturi tube means (3) is arranged in said feed-chamber means (7).

14. A heating means according to claim 13, wherein said Venturi tube means (3) is associated with a nozzle means (5) communicating with a collector means (6) connected with a feed-conduit means (4) for said fuel.

15. A heating means according to one of the claims from 1 to 12, wherein said feed-chamber means (7) is connected with a fan means (23), said fan means (23) being furthermore connected with a feed-conduit means (36) for said fuel.

16. A heating means according to one of the claims from 2 to 15, further comprising a second heat-exchanger means (12) arranged at a distance from said second face of the diffuser means (9).

17. A heating means according to claim 16, wherein between said heat-exchanger means (12) and said diffuser means (9) a combustion chamber is defined (2) for the combustion of said mixture.

18. A heating means according to claim 16 or 17, wherein said second heat-exchanger means (12) is connected to said heat-exchanger means (10) by means of said second fitting means (11; 35).

19. A heating means according to one of the claims from 16 to 18, wherein said second heat-exchanger means (12) is connected to an evacuation conduit (14) of said fluid by means of a third fitting means (16).

20. A heating means according to one of the claims from 16 to 19, wherein said second fitting means (11) defines a first wall of said combustion chamber (2).

21. A heating means according to one of the claims from 16 to 20, wherein said first fitting means (13) and said third fitting means (16) define a second wall of said combustion chamber.

22. A heating means according to one of the claims from 16 to 21, wherein a pair of opposite walls (19, 20) of said combustion chamber (2) is provided with openings (22) communicating with the outside of the combustion chamber (2).

23. A heating means according to one of the previous claims, further comprising a evacuation means (17; 30) for the fumes produced by combustion of said mixture, said evacuation means being connected with a flue means (29; 31).

24. A heating means according to claim 23, wherein said evacuation means comprises a first baffle means (24) and a second baffle means (25) associated with auxiliary evacuation openings (27).

25. A heating means according to claim 23 or 24, wherein said evacuation means comprises a third baffle means (26) associated with further auxiliary evacuation openings (28).

26. A heating means according to claim 23, wherein between said fume-evacuation means (17) and said flue means (29) an aspiration means (21) is arranged.
